Europäisches Patentamt

**European Patent Office**

**Office européen des brevets**

(19)

(11) Numéro de publication : **0 082 763**
**B1**

(12) **FASCICULE DE BREVET EUROPÉEN**

(45) Date de publication du fascicule du brevet :
30.07.86

(21) Numéro de dépôt : **82402287.5**

(22) Date de dépôt : **14.12.82**

(51) Int. Cl.⁴ : **G 09 F 3/03**, G 21 C 17/00,
G 10 K 11/18

(54) **Système de surveillance d'une pluralité de conteneurs utilisant des sceaux ultrasonores.**

(30) Priorité : **22.12.81 FR 8123997**

(43) Date de publication de la demande :
**29.06.83 Bulletin 83/26**

(45) Mention de la délivrance du brevet :
**30.07.86 Bulletin 86/31**

(84) Etats contractants désignés :
**BE CH DE GB IT LI LU NL**

(56) Documents cités :
**EP-A- 0 018 198**
**EP-A- 0 018 215**
**FR-A- 2 311 300**
**FR-A- 2 358 702**
**US-A- 4 126 514**

(73) Titulaire : **COMMUNAUTE EUROPEENNE DE L'ENER-**
**GIE ATOMIQUE (EURATOM)**
**Bâtiment Jean Monnet Plateau du Kirchberg Boîte**
**Postale 1907**
**L-1019 Luxembourg (LU)**

**COMMISSARIAT A L'ENERGIE ATOMIQUE Etablisse-**
**ment de Caractère Scientifique Technique et Indus-**
**triel**
**31/33, rue de la Fédération**
**F-75015 Paris (FR)**

(72) Inventeur : **Battagin, Gianpietro**
**Via Per Ranco**
**I-21021 Angera (Varese) (IT)**
Inventeur : **Denis, René**
**Via G. Verdi, 3**
**I-21014 Laveno (IT)**
Inventeur : **Ghiringhelli, Giulio**
**Via S. Ambrogio**
**I-21021 Angera (Varese) (IT)**
Inventeur : **Beaubron, Alain**
**2F. Avenue de l'Ouche**
**F-21000 Dijon (FR)**
Inventeur : **Guay, Philippe**
**30, rue de la Côte d'Or**
**F-21000 Dijon (FR)**
Inventeur : **Schaal, Alfred**
**8, Rue Ramolfo-Garnier**
**F-91300 Massy (FR)**

(74) Mandataire : **Mongrédien, André et al**
**c/o BREVATOME 25, rue de Ponthieu**
**F-75008 Paris (FR)**

EP 0 082 763 B1

Description

La présente invention a pour objet un système de surveillance d'une pluralité de conteneurs utilisant des sceaux ultrasonores. Elle trouve une application dans la surveillance d'un grand nombre de récipients contenant des produits dangereux, des matériaux précieux, des documents, etc.

Le principe de la surveillance par sceaux ultrasonores est connu. Il consiste à fixer de manière définitive un sceau ultrasonore sur le récipient à surveiller, ce sceau étant pourvu d'un marquage unique et non reproductible disposé dans le voisinage de la zone préétablie de rupture du sceau. Ce marquage est obtenu par des irrégularités de structure de la matrice qui contient le sceau, par exemple par des inclusions de matière ou des cavités distribuées de manière aléatoire.

Une telle technique revêt deux aspects : contrôle de l'identité du marquage et contrôle de l'intégrité du sceau. Elle met en jeu une opération de comparaison entre un signal de mesure provenant du sceau et un signal de référence mémorisé.

En général, un sceau ultrasonore comprend un transducteur apte à transformer une excitation électrique en une onde ultrasonore et réciproquement. Les irrégularités de structure présentes sur le trajet de l'onde ultrasonore émise, donnent naissance à des échos ultrasonores détectés par le transducteur, qui délivre en retour un signal électrique dont la forme complexe est spécifique du sceau. Des moyens électroniques sont prévus pour exciter le transducteur, recueillir le signal électrique qu'il délivre et analyser ce signal.

Dans un tel dispositif, le transducteur ultrasonore travaille à la fois en émetteur et en récepteur de sorte qu'un sceau ne comprend qu'un seul transducteur. Toutefois, dans la demande de brevet EP-A-18198, il est décrit un sceau marqué dont la matrice contient deux transducteurs piézo-électriques. Mais, dans un tel sceau, l'un des transducteurs est affecté à la détection de l'identité du marquage et l'autre au contrôle de l'intégrité du sceau. Chacun de ces transducteurs reste à la fois émetteur et récepteur de signaux ultrasonores.

De tels sceaux ne permettent pas de travailler avec suffisamment de précision et de rapidité pour pouvoir être utilisés en grand nombre.

La présente invention a justement pour objet un système qui est spécialement adapté, à la fois du point de vue mécanique et du point de vue électronique, à la surveillance d'un grand nombre d'unités (plusieurs centaines ou plusieurs milliers).

A cette fin, l'invention propose un système de surveillance d'une pluralité de conteneurs, utilisant des sceaux ultrasonores solidaires de ces conteneurs et des moyens électroniques reliés à ces sceaux pour ausculter séquentiellement ces sceaux et pour traiter électroniquement les signaux prélevés sur les sceaux, ce système étant caractérisé en ce que :

A) a) chaque sceau est constitué d'un corps qui comprend un transducteur ultrasonore émetteur et un transducteur ultrasonore récepteur mis en contact avec un élément formant ligne à retard pour les signaux ultrasonores émis et reçus, cet élément affleurant à la surface du sceau, un écran métallique ancré dans la ligne à retard entre les transducteurs émetteur et récepteur,

b) chaque sceau est associé à un goujon porteur d'une identité acoustique, ce goujon étant fixé à la surface du sceau contre la ligne à retard en regard de l'écran métallique et face aux deux transducteurs, l'extrémité du goujon étant destinée à être enfichée dans le couvercle du conteneur à surveiller,

c) ces moyens permettant le contrôle à la fois de l'identité et de l'intégrité du sceau, le marquage conférant l'identité étant disposé dans le goujon en dehors du corps du sceau,

B) les moyens électroniques comprennent :

a) au moins un module d'auscultation séquentielle et cyclique des sceaux, comprenant autant de sorties et autant d'entrées que de sceaux, les sorties étant reliées aux transducteurs émetteurs des sceaux et les entrées aux transducteurs récepteurs des sceaux,

b) au moins un module de traitement électronique relié au module d'auscultation et commandant un échantillonnage du signal reçu.

Si un tel système est capable de scruter un grand nombre de sceaux avec un cycle rapide (moins de 2 secondes), il peut a fortiori travailler avec un nombre réduit (quelques unités).

Au niveau de chaque sceau des perfectionnements sont en outre mis en œuvre pour améliorer leur performance électrique, permettre leur réutilisation et améliorer le pouvoir de discrimination des signaux.

Essentiellement, ces perfectionnements consistent dans la mise en contact des transducteurs avec un élément servant de ligne à retard pour les signaux ultrasonores ; dans le déplacement du marquage d'identification en dehors du corps du sceau dans un élément mécanique qui est un goujon faisant à la fois siège du sceau, ancre du sceau dans le scellement du récipient et prolongement acoustique de la ligne à retard ; dans la disposition symétrique des éléments constituant le sceau et dans la position du sceau lui-même autour de l'axe de symétrie du goujon ; enfin dans la liaison entre le sceau et le goujon.

Du point de vue des moyens électroniques, l'invention prévoit une structure qui permet l'auscultation séquentielle et cyclique très rapide des sceaux, ce qui permet la surveillance d'un grand nombre de scellements, ce que ne permettaient pas les moyens électroniques de l'art antérieur. Le module élémentaire scrute cycliquement par exemple 16 sceaux en 2 secondes. L'association de n modules identiques permet l'auscultation de 16n sceaux, dans le même temps de 2 secondes.

Les caractéristiques de l'invention apparaîtront mieux après la description qui suit, d'exemples de réalisation donnés à titre explicatif et nullement limitatif. Cette description se réfère à des dessins annexés sur lesquels :

la figure 1 représente le schéma général du système de l'invention,

la figure 2 représente, en coupe, un sceau ultrasonore selon l'invention,

la figure 3 illustre la forme des signaux intervenant dans le système de l'invention,

la figure 4 représente les entrées-sorties du module d'auscultation des sceaux,

la figure 5 représente le schéma synoptique de ce module,

la figure 6 représente un circuit d'horloge,

la figure 7 représente un circuit à émetteurs multiples,

la figure 8 illustre un mode de réalisation d'un émetteur,

la figure 9 représente un circuit récepteur,

la figure 10 représente un circuit adaptateur,

la figure 11 illustre un mode particulier de réalisation d'un échantillonneur.

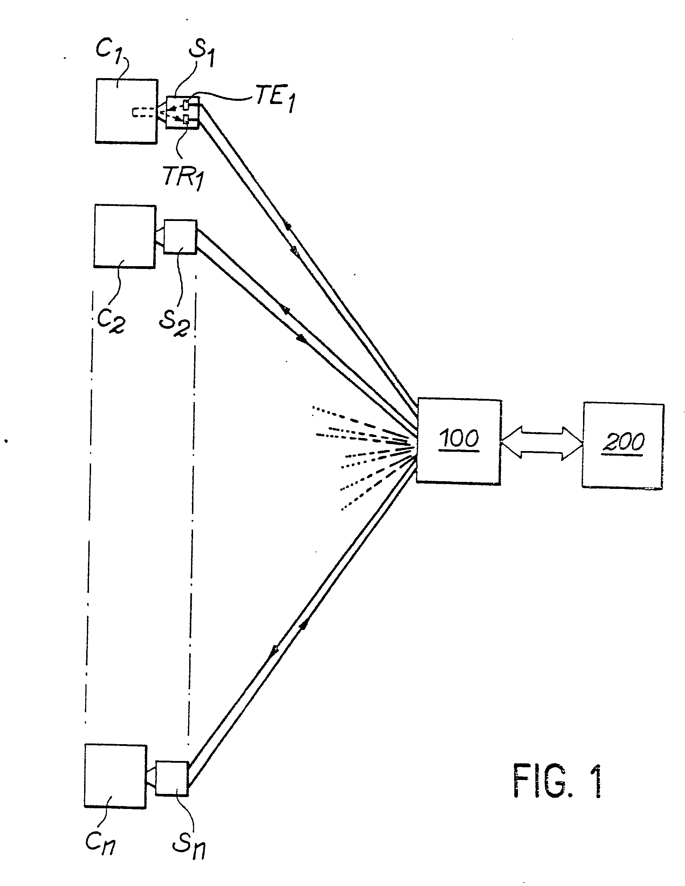

Le système représenté sur la figure 1 comprend une pluralité de n conteneurs $C_1$, $C_2$... $C_n$ munis chacun d'un sceau ultrasonore $S_1$, $S_2$... $S_n$. Chaque sceau comprend un transducteur émetteur ($TE_1$, $TE_2$... $TE_n$) et un transducteur récepteur ($TR_1$, $TR_2$... $TR_n$). Ces transducteurs sont reliés par autant de connexions doubles à un module d'auscultation 100. Ce dernier est commandé par un module de traitement 200.

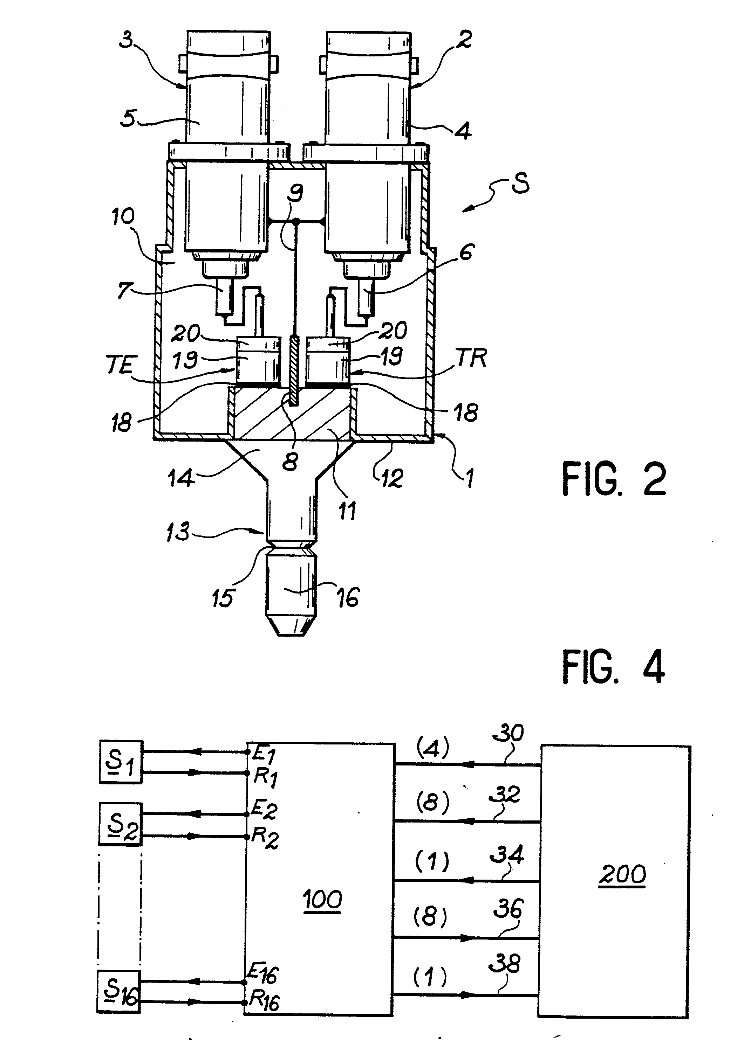

Un sceau conforme à l'invention est illustré en détail sur la figure 2. Tel que représenté le sceau comprend un corps 1 comprenant, dans sa partie supérieure, deux prises coaxiales 2 et 3 reliées au module d'auscultation, un transducteur émetteur TE et un transducteur récepteur TR, tous deux reliés à l'âme 7 des prises coaxiales. Une plaquette conductrice 8, formant écran électrique, est interposée entre les deux transducteurs TE et TR. Cette plaquette est connectée par des fils 9 aux conducteurs extérieurs 4 et 5 des prises 1 et 2. Chaque transducteur est composé d'un élément piézoélectrique 18, d'un amortisseur électriquement conducteur 19 en résine (époxy par exemple) chargée de particules métalliques à haute concentration (tungstène) et d'une électrode de contact 20. Les transducteurs sont collés sur la ligne à retard 11 à l'aide d'une colle cyaniacrylate.

La partie inférieure des prises 2 et 3, les transducteurs TE et TR et la plaquette 8 sont enrobés dans un volume en résine époxy 10.

Les parties piézo-électriques 18 des transducteurs TE et TR sont collées sur un élément 11 formant ligne à retard pour les ondes ultrasonores. Cet élément peut être en duralumin. Son extrémité affleure à la surface 12 du sceau. Un goujon de scellement 13, par exemple en duralumin, est collé contre la surface 12 du sceau. Il est donc en contact avec la ligne à retard 11. Ce goujon possède une identité acoustique.

Le goujon 13 comprend 3 parties : un guide d'onde 14, une zone de rupture 15 et une zone d'ancrage 16. Cette dernière est enfichée dans le couvercle du conteneur à surveiller. Le goujon doit nécessairement être cassé au niveau de la zone de rupture 15 pour que puisse être ouvert le conteneur. La partie restant solidaire du goujon, après rupture, est supprimée par usinage et le sceau peut être récupéré, un nouveau goujon étant fixé par collage.

Sur la face du goujon destinée à être collée contre la surface 12, peuvent être pratiqués des défauts artificiels, qui participent à l'identité du sceau ou du sceau récupéré.

La ligne à retard 11 et le goujon 13 doivent être collés l'un sur l'autre. L'épaisseur de la couche de colle doit permettre une adaptation acoustique convenable. Elle est par exemple de l'ordre de 20 μm. Une colle de type cyaniacrylate peut être employée, par exemple de la Marque « Eastman Kodak 910 ».

Le transducteur ultrasonore émetteur TE est excité par une impulsion électrique de haute tension, par exemple de 200 volts, de temps de montée 50 à 100 ns. Le transducteur engendre une onde acoustique qui se propage à travers la ligne à retard, atteint la surface 12 où est collé le goujon et se trouve partiellement réfléchie par les défauts qui y sont présents. L'onde composée réfléchie par ces défauts atteint le transducteur récepteur TR qui délivre alors un signal basse tension. Sa fréquence est d'environ 5 MHz et sa valeur crête 100 mV, avec un retard de 5 μs et une durée de 10 μs. Ce signal constitue l'identité du sceau. Il contient de plus l'information d'intégrité compte tenu de ce que toute altération notable du goujon et, notamment sa rupture, modifie nettement la forme du signal.

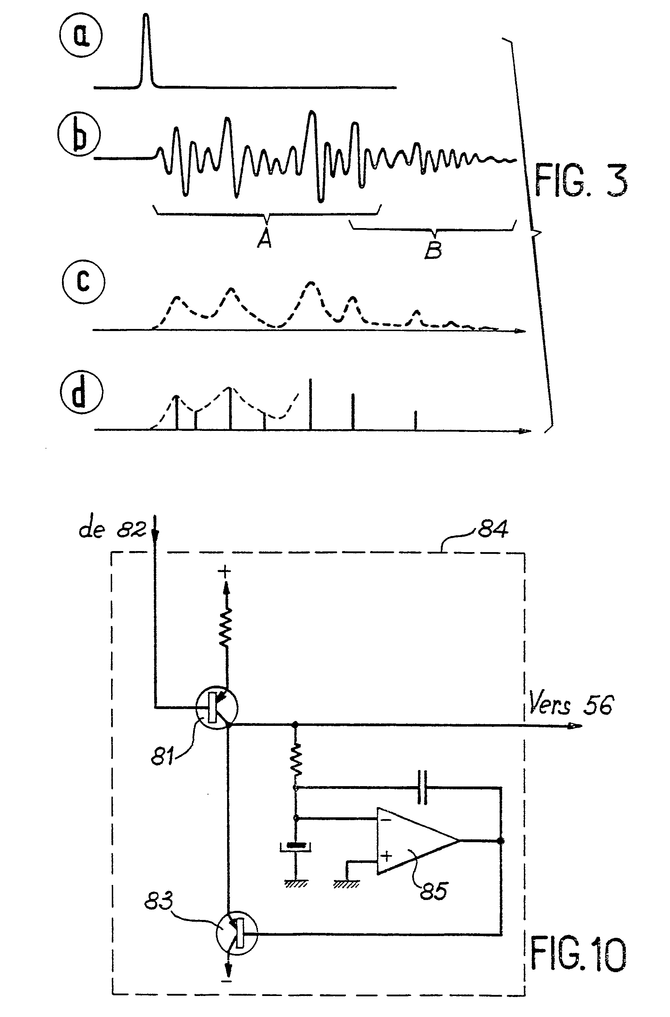

La figure 3 représente l'allure des signaux intervenant dans l'invention. Sur la ligne a apparaît l'impulsion électrique d'excitation appliquée au transducteur émetteur TE et sur la ligne b le signal de réception délivré par le transducteur TR. On notera le retard entre les deux, qui est dû à la ligne à retard 11. Par ailleurs, le blindage 8 évite l'apparition de parasites électriques sur le signal de réception au moment de l'excitation. Dans le signal de réception on peut distinguer deux zones, la première, A, qui est plus spécialement une zone d'identité et une seconde B, partiellement confondue avec la première, et qui est une zone d'intégrité puisque les signaux qui la composent proviennent des zones les plus éloignées des transducteurs, donc du goujon. Le signal de réception fait ensuite l'objet d'un redressement (ligne c) puis d'un échantillonnage (ligne d) par les moyens électroniques.

Le système de l'invention, qui porte donc sur la combinaison de moyens ainsi mécaniques et électroniques, permet d'obtenir des signaux qui conduisent à une précision et une rapidité de mesure accrues par rapport aux dispositifs de l'art antérieur.

La description qui suit porte maintenant sur les moyens électroniques aptes à ausculter une pluralité de sceaux tels que celui qui vient d'être décrit. Il sera supposé à titre purement explicatif qu'il y a 16 conteneurs scellés à surveiller. Les différents éléments seront alors indicés de 1 à 16. L'extension à un nombre plus élevé est immédiate.

De manière générale, les moyens électroniques de l'invention fonctionnent de la manière suivante. La scrutation des sceaux s'effectue de manière séquentielle et cyclique grâce au module 100. Le module de traitement 200 pilote l'ensemble. Le module d'auscultation échantillonne le signal en un certain nombre de valeurs (par exemple 6), correspondant à des instants d'échantillonnage particuliers (par exemple 4 valeurs pour la partie A du signal correspondant à l'information d'identité et deux valeurs pour la partie B correspondant à l'information d'intégrité). Les valeurs des échantillons sont ensuite converties en numérique et transmises au module 200 de traitement. Celui-ci compare ces valeurs, après traitement numérique, à celles de sa mémoire, pour en déduire l'identité et vérifier l'intégrité du sceau adressé. Le module de traitement peut également déclencher des procédures particulières (alarmes, etc.) en fonction des résultats des contrôles effectués.

Cette suite de traitements électroniques est rendue possible par la structure particulière du sceau décrit plus haut et par la forme du signal à traiter. C'est cette coopération des moyens qui donne au système de l'invention ses performances de précision et de rapidité.

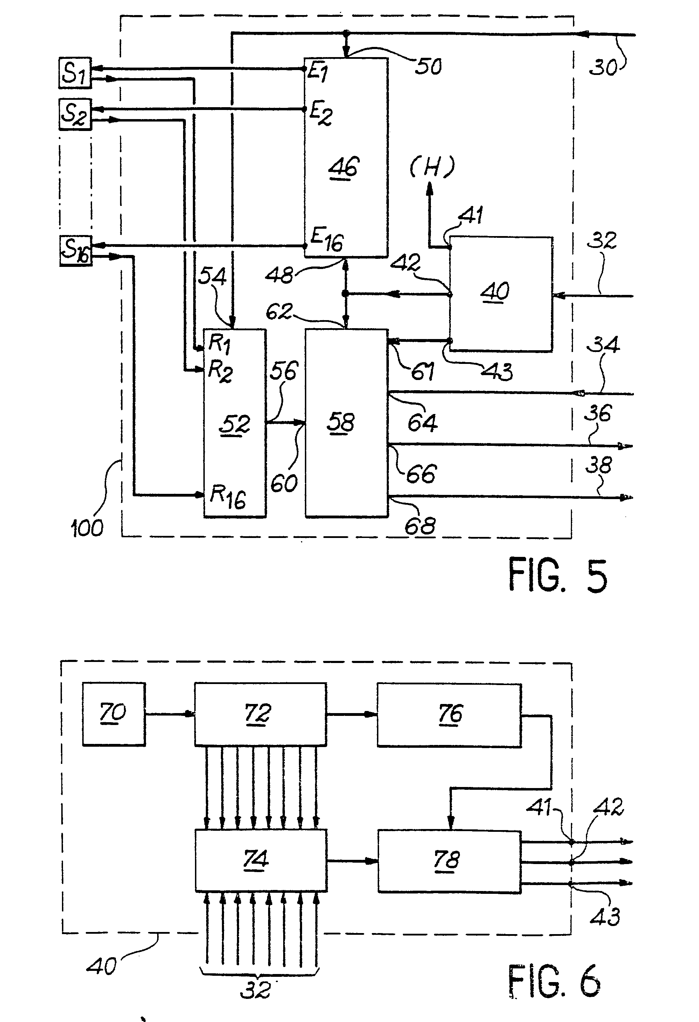

Comme indiqué sur la figure 4, le module 100 d'auscultation des sceaux comprend 16 accès servant à l'émission ($E_1$, $E_2$... $E_{16}$) et 16 accès servant à la réception ($R_1$, $R_2$... $R_{16}$). Chacun de ces accès est relié par un câble coaxial d'émission et un câble coaxial de réception aux transducteurs émetteur ou récepteur du sceau correspondant. Par ailleurs le module 100 est relié au module de traitement 200 par :

un bus 30 d'adressage des sceaux ; ce bus est à 4 bits et permet d'adresser 16 sceaux ,

un bus 32 à 8 bits véhiculant les signaux déterminant les instants d'échantillonnage des signaux de réception ; les instants d'échantillonnage s'échelonnent entre 0 et 25,5μs par pas de 0,1 μs,

une connexion 34 de déclenchement de mesure indiquant au module de mise en œuvre des sceaux de commencer la mesure pour le sceau et l'échantillon considéré,

un bus de données 36, à 8 bits, véhiculant les valeurs des amplitudes mesurées pour les différents échantillons ; ces valeurs varient par exemple de 0 à 512 mV à 2 mV près,

une connexion 38 véhiculant un signal indiquant au module de traitement 200 que la mesure faite par le module 100 d'auscultation des sceaux est achevée et que le traitement des résultats peut commencer.

L'organisation générale du module 100 est représentée sur la figure 5. Ce module comprend quatre circuits essentiels :

un circuit d'horloge 40 à trois sorties 41, 42, 43, délivrant respectivement une impulsion d'horloge H, une impulsion de synchronisation et une impulsion retardée ; ce circuit reçoit le signal véhiculé par la connexion 32,

un circuit émetteur 46, comprenant autant d'émetteurs et autant de sorties $E_1$, $E_2$... qu'il y a de sceaux à contrôler, (en l'occurence 16) chaque sortie étant reliée au transducteur d'émission d'un sceau ; ce circuit possède une entrée d'adressage 50, reliée au bus d'adressage 30 qui véhicule le signal d'adressage, et une entrée de commande 48, reliée à la sortie 42 du circuit d'horloge 40, cette entrée recevant l'impulsion de synchronisation,

un circuit récepteur 52 possédant une entrée d'adressage 54 reliée au bus d'adressage 30, autant d'entrées $R_1$, $R_2$... qu'il y a de sceaux à contrôler, chaque entrée étant reliée au transducteur de réception du sceau associé, et une sortie 56,

un échantillonneur numérique 58 à une entrée de signal 60 reliée à la sortie 56 du circuit récepteur 52, une première entrée de commande 61 reliée à la sortie 43 du circuit d'horloge 40 et recevant l'impulsion retardée déterminant l'instant de prise d'échantillons, une seconde entrée de commande 62 reliée à la sortie 42 du circuit d'horloge et recevant l'impulsion commandant la mesure, une première sortie 66 reliée au bus 36 véhiculant la valeur numérique d'un échantillon et une seconde sortie 68 reliée à la connexion 38 véhiculant l'impulsion indiquant que l'échantillonnage est terminé.

Ces différents sous-ensembles sont illustrés plus en détail sur les figures 6 à 11 qui vont maintenant être décrites.

La figure 6, tout d'abord, illustre le circuit d'horloge 40. Ce circuit est constitué d'un oscillateur 70 fonctionnant à 10 MHz et réalisé, par exemple, à l'aide d'un circuit intégré SN 74 629 de Texas Instruments. La période des impulsions émises par cet oscillateur est de 0,1 μs. Ces impulsions sont dirigées vers un compteur 72 à 8 bits, constitué par exemple de deux circuits SN 74 163 (capacité 256). En sortie du compteur, les impulsions ont une période de 25,6 μs. Un comparateur 74, à 8 bits, constitué par exemple de deux circuits SN 7 485, compare le contenu du compteur 72 au nombre apparaissant sur le bus 32. Ainsi, à la sortie du comparateur, apparaît une impulsion retardée de N fois 0,1 μs si N est le nombre présent sur le bus 32. Le compteur 72 est suivi d'un diviseur 76 par $2^6$ constitué, par exemple, de deux cicruits SN 74 LS 163. Ainsi, la sortie de ce diviseur délivre des impulsions de période égale à $25,6 \times 2^6 \approx 1,64$ ms. Un circuit bistable 78, constitué par exemple par une bascule SN 74 LS 72 et un double monostable SN 74 LS 123, met en forme les impulsions précédentes. Sur les sorties 41, 42, 43 du circuit horloge, on trouve alors une impulsion d'horloge H, une impulsion de synchronisation, une impulsion retardée de prise d'échantillon.

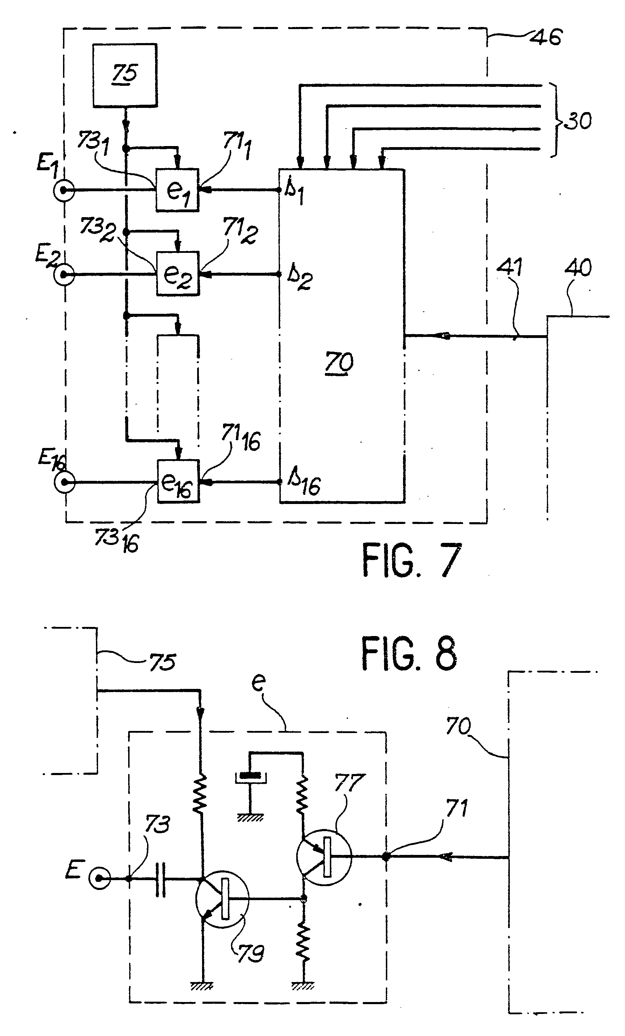

La figure 7 représente le schéma du circuit émetteur 46. Ce circuit comprend :

un démultiplexeur 70 à une entrée reliée à la connexion 41 recevant l'impulsion d'horloge et autant de sorties $s_1$, $s_2$... que de sceaux,

un ensemble de circuits émetteurs $e_1$, $e_2$... en nombre égal au nombre de sceaux, chaque émetteur ayant une entrée de commande $71_1$, $71_2$... reliée à une sortie du multiplexeur et une sortie $73_1$, $73_2$... reliée à l'une des sorties $E_1$, $E_2$... du circuit émetteur. Chaque émetteur est relié par ailleurs à une source d'alimentation 75.

Le démultiplexeur peut être constitué à l'aide d'un circuit intégré SN 74 LS 154. Dans l'exemple pris il reçoit une adresse à quatre bits et sélectionne une sortie parmi 16.

Chaque émetteur peut être constitué, comme indiqué sur la figure 8, par un premier transistor 77 dont la base est reliée à l'entrée 71 reliée au démultiplexeur 70 et le collecteur à la base d'un thyratron solide 79, dont la grille est reliée à la fois à la source d'alimentation 75 et à la sortie 73. Le transistor 77 peut être un 2N 2 907 et le thyratron solide 79 un 2N 1 599. La source 75 peut délivrer 300 V environ. L'émetteur représenté peut délivrer des impulsions de 200 V sur 50 ohms.

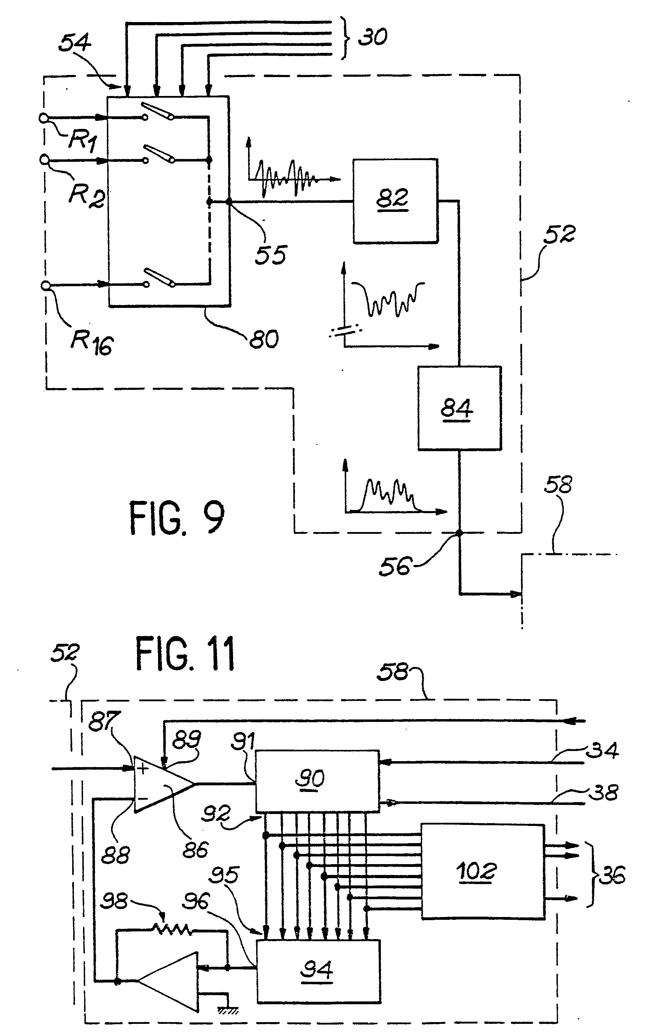

La figure 9 représente le schéma synoptique d'un circuit récepteur 52 utilisable dans l'invention. Ce circuit comprend un commutateur analogique 80 (par exemple du type DG 506) à autant d'entrées $R_1$, $R_2$... que de sceaux, une entrée de commande 54 reliée au bus d'adressage 30, une sortie 55 reliée à un détecteur 82 constitué par exemple par un circuit intégré MC 1 596. Lorsque le signal détecté est superposé à un niveau continu non nul (ce qui est le cas avec le circuit intégré NC 1 596), un circuit adaptateur 84 est disposé en sortie du circuit.

Comme représenté sur la figure 10, ce circuit adaptateur peut être réalisé à l'aide de deux transistors 81 et 83 (par exemple des 2N 2 907) et d'un amplificateur opérationnel 85 (par exemple un SN 72 741) pour transposer le signal détecté autour de 0 volt. Dans l'exemple illustré, le signal de sortie à une durée d'environ 10 ou 15 µs et une amplitude comprise entre 200 et 500 mV.

Enfin, la figure 11 représente le schéma de l'échantillonneur 58. Tel que représenté ce circuit comprend :

un comparateur rapide 86, possédant une entrée positive 87 recevant le signal à échantillonner, une entrée négative 88 et une entrée de commande d'échantillonnage 89 qui est du type verrouillé ; ce comparateur peut être du type AM 686 ;

un compteur 90 possédant une entrée 91 reliée à la sortie du comparateur et une sortie numérique 92 ; ce compteur qui est en fait un registre fonctionnant sur le principe de la dichotomie, peut être un MC 14 559 ;

un convertisseur numérique-analogique 94 possédant une entrée numérique 95 reliée à la sortie 92 du compteur et une sortie analogique 96 ; ce convertisseur peut être un AD 561 ;

un convertisseur courant-tension 98 inséré entre la sortie du convertisseur et l'entrée négative 88 du comparateur ; ce convertisseur peut être un SN 72 740 ;

une mémoire tampon 102 possédant une entrée reliée à la sortie du compteur et une sortie reliée au bus de données 36 ; cette mémoire peut être constituée par un circuit SN 7 407 (8 bits).

Ce circuit fonctionne de la façon suivante. Le signal à échantillonner est appliqué sur l'entrée 87 du comparateur 86. Le signal commandant l'échantillonnage est appliqué sur l'entrée 89. Si le signal à échantillonner est supérieur à la tension appliquée sur l'entrée 88 au moment où est appliqué le signal d'échantillonage, la sortie comparateur passe au niveau 1 et incrémente le compteur 90. La sortie numérique du compteur est transformée en valeur analogique, laquelle sert de tension de comparaison sur l'entrée 88 du comparateur. Par approximations successives et au bout de 8 impulsions d'horloge, le contenu du compteur est égal au signal d'entrée à l'instant d'échantilonnage. Le temps total par échantillon est en pratique de 10 fois 1,6 ms soit 16 ms. La sortie 92 du compteur (bus à 8 fils) est reliée au circuit tampon 102, qui est du type à collecteurs ouverts. Celui-ci délivre la valeur numérique de l'échantillon sur le bus de sortie 36. Une impulsion est délivrée par le compteur 90 par la connexion 38 lorsque la mesure est terminée.

## Revendications

1. Système de surveillance d'une pluralité de conteneurs ($C_1$, $C_2$, ... $C_n$), utilisant des sceaux ultrasonores ($S_1$, $S_2$, ... $S_n$) solidaires de ces conteneurs et des moyens électroniques reliés à ces sceaux pour ausculter séquentiellement ces sceaux et pour traiter électroniquement les signaux prélevés sur les sceaux, ce système étant caractérisé en ce que :

A) a) chaque sceau est constitué d'un corps qui comprend un transducteur ultrasonore émetteur (TE) et un transducteur ultrasonore récepteur (TR) mis en contact avec un élément (11) formant ligne à retard pour les signaux ultrasonores émis et reçus, cet élément affleurant à la surface (12) du sceau, un écran métallique (8) ancré dans la ligne à retard entre les transducteurs émetteur (TE) et récepteur (TR),

b) chaque sceau est associé à un goujon (13) porteur d'une identité acoustique, ce goujon étant fixé à la surface (12) du sceau contre la ligne à retard (11) en regard de l'écran métallique (8) et face aux deux transducteurs (TE, TR), l'extrémité du goujon étant destinée à être enfichée dans le couvercle du conteneur à surveiller,

c) ces moyens permettant le contrôle à la fois de l'identité et de l'intégrité du sceau, le marquage conférant l'identité étant disposé dans le goujon en dehors du corps du sceau,

B) les moyens électroniques comprennent :

a) au moins un module (100) d'auscultation séquentielle et cyclique des sceaux, comprenant autant de sorties et autant d'entrées que de sceaux, les sorties ($E_1$, $E_2$... $E_n$) étant reliées aux transducteurs émetteurs (TE, $TE_2$... $TE_n$) des

sceaux et les entrées ($R_1$, $R_2$... $R_n$) aux transducteurs récepteurs ($TR_1$, $TR_2$... $TR_n$) des sceaux,

b) au moins un module (200) de traitement électronique relié au module (100) d'auscultation et commandant un échantillonnage du signal reçu.

2. Système selon la revendication 1, caractérisé en ce que chaque transducteur est associé à un conducteur coaxial (2, 3) ayant une âme (6, 7) reliée au transducteur et un conducteur extérieur (4, 5) relié à l'écran (8).

3. Système selon la revendication 1, caractérisé en ce que chaque transducteur possède un corps constitué par un élément piézo-électrique (18), un amortisseur (19) électriquement conducteur en résine contenant des particules métalliques à haute concentration et une électrode (20) de contact.

4. Système selon la revendication 1, caractérisé en ce que les transducteurs (TE, TR) sont collés sur la ligne à retard (11).

5. Système selon la revendication 1, caractérisé par le fait que le goujon (13) est fixé à la surface (12) du sceau par un collage permettant une adaptation acoustique.

6. Système selon les revendications 4 et 5, caractérisé en ce que l'une au moins des colles utilisées pour les transducteurs et le goujon est en cyaniacrylate.

7. Système selon l'une quelconque des revendications 1 à 6, caractérisé en ce que le goujon comprend un guide d'onde (14), une zone de rupture (15) et une zone d'ancrage (16).

8. Système selon l'une quelconque des revendications 1 à 7, caractérisé par le fait que la ligne de retard (11) et le goujon (13) sont en duralumin.

9. Système selon l'une quelconque des revendications 1 à 8, caractérisé par le fait que le goujon (13) constitue un prolongement acoustique de la ligne à retard (11).

10. Système selon l'une quelconque des revendications 1 à 9, caractérisé par le fait que le goujon (13) contient des éléments d'identification.

11. Système selon la revendication 1, caractérisé en ce que le module (100) d'auscultation des sceaux comprend :

un circuit d'horloge (40) à trois sorties (41, 42, 43) délivrant respectivement une impulsion d'horloge, une impulsion de synchronisation et une impulsion retardée,

un circuit émetteur (46) comprenant autant d'émetteurs qu'il y a de sceaux à contrôler, chaque émetteur étant relié au transducteur d'émission d'un sceau, ce circuit ayant une entrée d'adressage (50) reliée à un bus d'adressage (30) provenant du module (200) de traitement et véhiculant un signal d'adressage et une entrée de commande (48) reliée au circuit d'horloge (40) et recevant l'impulsion de synchronisation,

un circuit récepteur (52) comprenant autant d'entrées ($R_1$, $R_2$...) qu'il y a de sceaux à contrôler, chaque entrée étant reliée au transducteur de réception d'un sceau et une sortie délivrant un signal détecté,

un échantillonneur numérique (58) à une entrée de signal (60) reliée à la sortie du circuit récepteur (52) et une première entrée de commande (61) recevant l'impulsion retardée déterminant l'instant de prise d'échantillon, une seconde entrée de commande (62) commandant la mesure, une première sortie (66) reliée à un bus (36) véhiculant la valeur numérique de l'échantillon et une seconde sortie (68) reliée à une connexion (38) véhiculant une impulsion quand l'échantillonnage est terminé.

12. Système selon la revendication 11, caractérisé en ce que le circuit émetteur (46) comprend :

un démultiplexeur (70) à une entrée reliée à la connexion (41) recevant l'impulsion d'horloge et autant de sorties ($s_1$, $s_2$...) que de sceaux, et une entrée d'adressage reliée au bus d'adressage (30),

un ensemble de circuits émetteurs ($e_1$, $e_2$...) en nombre égal au nombre de sceaux, chaque émetteur ayant une entrée de commande ($71_1$, $71_2$...) reliée à une sortie du multiplexeur et une sortie ($73_1$, $73_2$...) reliée à une des sorties du circuit émetteur.

13. Système selon la revendication 11, caractérisé en ce que le récepteur comprend un commutateur analogique (80) ayant une entrée d'adressage (54) reliée au bus d'adressage (30) et autant d'entrées ($R_1$, $R_2$...) que de sceaux, un détecteur (82) relié à ce commutateur et un adaptateur (84) relié au détecteur.

14. Système selon la revendication 11, caractérisé en ce que l'échantillonneur (58) comprend :

un comparateur rapide (86) à une entrée positive (87) recevant le signal à échantillonner et une entrée négative (88), une entrée de commande d'échantillonnage (89) et une sortie,

un compteur (90), ayant une entrée (91) reliée à la sortie du comparateur et une sortie numérique (92),

un convertisseur numérique-analogique (94) ayant une entrée numérique (95) reliée à la sortie (92) du compteur et une sortie analogique (96),

un convertisseur courant-tension (98) ayant une entrée reliée à la sortie du convertisseur et une sortie reliée à l'entrée négative (88) du comparateur.

**Claims**

1. System for monitoring a plurality of containers ($C_1$, $C_2$, ... $C_n$), using ultrasonic seals ($S_1$, $S_2$...$S_n$) integral with these containers and electronic means connected to these seals in order to sequentially sound these seals and to electronically process the signals taken from the seals, this system being characterized in that :

A) a) each seal consists of a body which includes an ultrasonic transmitting transducer (TE) and an ultrasonic receiving transducer (TR) placed in contact with an element (11) forming a delay line for the ultrasonic signals transmitted and received, this element being flush with the surface (12) of the seal, a metal screen (8) anchored in the delay line between the transmitting (TE) and receiving (TR) transducers,

b) each seal is associated with a stud (13) which bears an acoustic identity, this stud being fixed to the surface (12) of the seal against the delay line (11) opposite the metal screen (8) and facing the two transducers (TE, TR), the end of the stud being intended to be pushed into the cover of the container to be monitored,

c) these means enabling the checking of both the identity and the integrity of the seal, the marking providing the identity being placed in the stud outside the body of the seal,

B) the electronic means include :

a) at least one module (100) for the sequential and cyclic sounding of the seals, including as many outputs and as many inputs as there are seals, the outputs $(E_1, E_2... E_n)$ being connected to the transmitting transducers (TE, $TE_2$... $TE_n$) of the seals and the inputs $(R_1, R_2... R_n)$ to the receiving transducers ($TR_1, TR_2$... $TR_n$) of the seals,

b) at least one electronic processing module (200) connected to the sounding module (100) and controlling a sampling of the signal received.

2. System according to claim 1, characterized in that each transducer is associated with a coaxial cable (2, 3) having a core (6, 7) connected to the transducer and an external conductor (4, 5) connected to the screen (8).

3. System according to claim 1, characterized in that each transducer has a body consisting of a piezo-electric element (18), an electrically conducting damper (19) made of resin containing metallic particles in high concentration and a contact electrode (20).

4. System according to claim 1, characterized in that the transducers (TE, TR) are glued to the delay line (11).

5. System according to claim 1, characterized in that the stud (13) is fixed to the surface (12) of the seal by an adhesive enabling acoustic matching.

6. System according to claims 4 and 5, characterized in that at least one of the adhesives used for the transducers and the stud is made of cyanoacrylate.

7. System according to any one of claims 1 to 6, characterized in that the stud includes a waveguide (14), a fracture zone (15) and an anchoring zone (16).

8. System according to any one of claims 1 to 7, characterized in that the delay line (11) and the stud (13) are made of duralumin.

9. System according to any one of claims 1 to 8, characterized in that the stud (13) forms an acoustic extension of the delay line (11).

10. System according to any one of claims 1 to 9, characterized in that the stud (13) contains identification elements.

11. System according to claim 1, characterized in that the module (100) for sounding the seals includes :

a clock circuit (40) having three outputs (41, 42, 43) delivering a clock pulse, a synchronization pulse and a delayed pulse respectively,

a transmitting circuit (46) including as many transmitters as there are seals to be checked, each transmitter being connected to the transmitting transducer of a seal, this circuit having an addressing input (50) connected to an addressing bus (30) coming from the processing module (200) and carrying an addressing signal and a control input (48) connected to the clock circuit (40) and receiving the synchronization pulse,

a receiving circuit (52) including as many inputs $(R_1, R_2...)$ as there are seals to be checked, each input being connected to the receiving transducer of a seal and an output delivering a detected signal,.

a digital sampler (58) having a signal input (60) connected to the output of the receiving circuit (52) and a first control input (61) receiving the delayed pulse determining the sample taking time, a second control input (62) controlling the measurement, a first output (66) connected to a bus (36) carrying the digital value of the sample and a second output (68) connected to a connection (38) carrying a pulse when the sampling is completed.

12. System according to claim 11, characterized in that the transmitting circuit (46) includes :

a demultiplexer (70) with one input connected to the connection (41) receiving the clock pulse and as many outputs $(s_1, s_2...)$ as there are seals, and an addressing input connected to the addressing bus (30),

a group of transmitting circuits $(e_1, e_2...)$ the number of which is equal to the number of seals, each transmitter having a control input ($71_1$, $71_2$...) connected to an output of the multiplexer and an output ($73_1$, $73_2$...) connected to one of the outputs of the transmitting circuit.

13. System according to claim 11, characterized in that the receiver includes an analog switch (80) having an addressing input (54) connected to the addressing bus (30) and as many inputs $(R_1, R_2...)$ as there are seals, a detector (82) connected to this switch and an adapter (84) connected to the detector.

14. System according to claim 11, characterized in that the sampler (58) includes :

a fast comparator (86) having one positive input (87) receiving the signal to be sampled and one negative input (88), a sampling control input (89) and one output,

a counter (90), having an input (91) connected to the output of the comparator and a digital output (92),

a digital-analog converter (94) having a digital input (95) connected to the output (92) of the counter and an analog output (96),

a current-voltage converter (98) having one input connected to the output of the converter and an output connected to the negative input (88) of the comparator,

a buffer memory (102) having an input connected to the output of the counter and an output connected to a measurement data bus (36).

**Patentansprüche**

1. Überwachungssystem für eine Vielzahl von Behältern ($C_1$, $C_2$, ... $C_n$) mit ultraschallgesicherten Verschlüssen ($S_1$, $S_2$... $S_n$), die mit diesen Behältern fest verbunden sind und mit elektronischen Einrichtungen, die mit diesen Verschlüssen verbunden sind, um sequentiell diese Verschlüsse abzuhorchen und um die an den Verschlüssen gelieferten Signale elektronisch zu verarbeiten, wobei dieses System dadurch gekennzeichnet ist, daß :

A) a) jeder Verschluß von einem Körper gebildet ist, der einen Ultraschallsendewandler (TE) und einen Ultraschallempfangswandler (TR) enthält, die mit einem Element (11) in Berührung stehen, das eine Verzögerungsleitung für die gesendeten und empfangenen Ultraschallsignale bildet, wobei dieses Element in die Oberfläche (12) des Verschlusses versenkt ist, in der Verzögerungsleitung zwischen den Sende- und Empfangswandlern (TE, TR) eine metallische Abschirmung (8) verankert ist,

b) jeder Verschluß einem Tragbolzen (13) einer akustischen Identität zugeordnet ist, wobei dieser Bolzen an der Oberfläche (12) des Verschlusses gegen die Verzögerungsleitung (11) gegenüber der metallischen Abschirmung (8) und gegenüber den zwei Wandlern (TE, TR) befestigt ist, wobei das Ende des Bolzens dazu bestimmt ist, in den Deckel des zu überwachenden Behälters eingesteckt zu werden,

c) diese Einrichtungen die Überwachung sowohl der Identität als auch der Unverletztheit des Verschlusses gestatten, wobei die Kennzeichnung, die die Identität verleiht, in dem Bolzen außerhalb des Verschlußkörpers angeordnet ist,

B) die elektronischen Einrichtungen enthalten :

a) wenigstens ein Modul (100) für das sequentielle und zyklische Abhorchen der Verschlüsse, enthaltend so viele Ausgänge und so viele Eingänge wie Verschlüsse, wobei die Ausgänge ($E_1$, $E_2$... $E_n$) mit den Sendewandlern ($TE_1$, $TE_2$... $TE_n$) der Verschlüsse und die Eingänge ($R_1$, $R_2$... $R_n$) mit den Empfangswandlern ($TR_1$, $TR_2$... $TR_n$) der Verschlüsse verbunden sind,

b) wenigstens ein elektronisches Verarbeitungsmodul (200), das mit dem Abhorchmodul (100) verbunden ist und die Abtastung des empfangenen Signals steuert.

2. System nach Anspruch 1, dadurch gekennzeichnet, daß jeder Wandler einem Koaxialleiter (2, 3) zugeordnet ist, der einen Innenleiter (6, 7) hat, der mit dem Wandler verbunden ist, und einen Außenleiter (4, 5) hat, der mit der Abschirmung (8) verbunden ist.

3. System nach Anspruch 1, dadurch gekennzeichnet, daß jeder Wandler einen Körper besitzt, der von einem piezoelektrischen Element (18), einem elektrisch leitenden Dämpfungskörper (19) aus Kunstharz, das Metallpartikel mit hoher Konzentration enthält, und einer Kontaktelektrode (20) gebildet ist.

4. System nach Anspruch 1, dadurch gekennzeichnet, daß die Wandler (TE, TR) auf die Verzögerungsleitung (11) aufgeklebt sind.

5. System nach Anspruch 1, gekennzeichnet durch die Tatsache, daß der Bolzen (13) an der Oberfläche (12) des Verschlusses durch eine Verklebung befestigt ist, die eine akustische Anpassung gestattet.

6. System nach den Ansprüchen 4 und 5, dadurch gekennzeichnet, daß wenigstens einer der Klebstoffe, die für die Wandler und den Bolzen verwendet werden, aus Cyanacrylat besteht.

7. System nach einem der Ansprüche 1 bis 6, dadurch gekennzeichnet, daß der Bolzen eine Wellenführung (14), eine Bruchzone (15) und eine Verankerungszone (16) aufweist.

8. System nach einem der Ansprüche 1 bis 7, gekennzeichnet durch die Tatsache, daß die Verzögerungsleitung (11) und der Bolzen (13) aus Duraluminium bestehen.

9. System nach einem der Ansprüche 1 bis 8, gekennzeichnet durch die Tatsache, daß der Bolzen (13) eine akustische Verlängerung der Verzögerungsleitung (11) bildet.

10. System nach einem der Ansprüche 1 bis 9, gekennzeichnet durch die Tatsache, daß der Bolzen (13) Identifikationselemente enthält.

11. System nach Anspruch 1, dadurch gekennzeichnet, daß das Abhörmodul (100) für die Verschlüsse enthält :

einen Taktkreis (40) mit drei Ausgängen (41, 42, 43), die jeweils einen Taktimpuls, einen Synchronisierimpuls und einen verzögerten Impuls liefern,

einen Sendekreis (46), der so viele Sender enthält, wie zu kontrollierende Verschlüsse vorhanden sind, wobei jeder Sender mit einem Sendewandler eines Verschlusses verbunden ist, der Kreis einen Adressiereingang (50) aufweist, der mit einer Adressierleitung (30) verbunden ist, die von dem Verarbeitungsmodul (200) stammt und ein Adressiersignal führt, und einen Steuereingang (48) enthält, der mit dem Taktkreis (40) verbunden ist und den Synchronisierimpuls erhält,

einen Empfangskreis (52), der so viele Eingänge ($R_1$, $R_2$...) enthält, wie zu kontrollierende Verschlüsse vorhanden sind, wobei jeder Eingang mit einem Empfangswandler eines Verschlusses verbunden ist und ein Ausgang ein ermitteltes Signal liefert,

einen numerischen Abtaster (58) mit einem Signaleingang (60), der mit dem Ausgang des Empfangskreises (52) verbunden ist, und mit einem ersten Steuereingang (61), der den verzögerten Impuls, der den Abtastzeitpunkt bestimmt, erhält, einem zweiten Steuereingang (62), der die Messung steuert, einem ersten Ausgang (66), der mit einer Leitung (36) verbunden ist, die den numerischen Abtastwert führt, und einem zweiten Ausgang (68), der mit einer Verbindung (38) verbunden ist, die einen Impuls weiterleitet, wenn die Abtastung beendet ist.

12. System nach Anspruch 11, dadurch gekennzeichnet, daß der Sendekreis (46) enthält : einen Demultiplexer (70) mit einem Eingang,

der mit der Verbindung (41), die den Taktimpuls erhält, und mit so viel Ausgängen ($s_1$, $s_2$...) wie Verschlüssen verbunden ist, und mit einem Adressiereingang, der mit der Adressierleitung (30) verbunden ist,

eine Gruppe von Sendekreisen ($e_1$, $e_2$...), deren Zahl gleich der Zahl der Verschlüsse ist, wobei jeder Sender einen Steuereingang ($71_1$, $71_2$...),der mit einem Ausgang des Multiplexers verbunden ist, und einen Ausgang ($73_1$, $73_2$...), der mit einem der Ausgänge des Sendekreises verbunden ist, aufweist.

13. System nach Anspruch 11, dadurch gekennzeichnet, daß der Empfänger enthält : einen analogen Umschalter (80), der einen Adressiereingang (54), der mit der Adressierleitung (30) verbunden ist, und so viele Eingänge ($R_1$, $R_2$...) wie Verschlüsse aufweist, einen Detektor (82), der mit diesem Umschalter verbunden ist, und ein Anpaßglied (84), das mit dem Detektor verbunden ist.

14. System nach Anspruch 11, dadurch gekennzeichnet, daß der Abtaster (58) enthält :

einen Schnellvergleicher (86) mit einem positiven Eingang (87), der das abzutastende Signal aufnimmt, und einem negativen Eingang (88), einem Abtaststeuereingang (89) und einem Ausgang,

einen Zähler (90) mit einem Eingang (91), der mit dem Ausgang des Komparators verbunden ist, und einem Digitalausgang (92),

einen Digital/Analog-Wandler (94) mit einem Digitaleingang (95), der mit dem Ausgang (92) des Zählers verbunden ist, und einem Analogausgang (96),

einen Strom/Spannungs-Wandler (98) mit einem Eingang, der mit dem Ausgang des Wandlers verbunden ist, und einem Ausgang, der mit dem negativen Eingang (88) des Komparators verbunden ist,

einen Pufferspeicher (102) mit einem Eingang, der mit dem Ausgang des Zählers verbunden ist, und einem Ausgang, der mit einer Meßwertevielfachleitung (36) verbunden ist.

FIG. 1

0 082 763

FIG. 2

FIG. 4

FIG. 3

FIG.10

FIG. 5

FIG. 6

FIG. 7

FIG. 8

FIG. 9

FIG. 11